# EUROPEAN PATENT APPLICATION

(11) **EP 1 956 800 A2**
(43) Date of publication of application: **13.08.2008**
(21) Application number: 08001831.0
(22) Date of filing: 31.01.2008
(51) Int. Cl.: H04L 29/08

(54) **Method of generating a data block in a wireless communication system**

(30) Priority: 06.02.2007 KR 20070012065
(71) Applicant: LG Electronics, Inc., Seoul 150-721 (KR)
(72) Inventor: Chun, Sung Duck, Anyang-si Gyeongki-do (KR); Lee, Young Dae, Anyang-si Gyeongki-do (KR); Park, Sung Jun, Anyang-si Gyeongki-do (KR); Yi, Seung June, Anyang-si Gyeongki-do (KR)
(74) Representative: TER MEER - STEINMEISTER & PARTNER GbR

(57) **Abstract**

A method of generating a data block in a wireless communication system is provided. The method includes receiving at least one data block of an upper layer, and generating a data block of a lower layer comprising a header and the at least one data block of the upper layer, the header comprising a Header Extension (HE) field, wherein the HE field indicates that the last data block of the upper layer ends at an end of the data block of the lower layer. By reducing size of the header of the data block, transmission rate can be improved.

## Description

### BACKGROUND OF THE INVENTION

### Field of the Invention

The present invention relates to wireless communication, and more specifically, to a method of generating a data block in a wireless communication system so as to optimize the header of the data block.

### Background of the Related Art

Global System for Mobile Communications (GSM) is a European style digital mobile communication system that is generally called a second generation communication system. The GSM in an early stage is focused on supporting voice services using a circuit-switched technique, and thus is lacks of consideration of packet data. Although a General Packet Radio Service (GPRS) is introduced to enhance transmission efficiency of packet data, as demands on voice services have reached a saturation point and customers' expectancy level toward provided services is elevated, demands on multimedia services provided through wireless networks are increased, and hence a limitation of the second generation communication systems has become an issue.

A Universal Mobile Telecommunications System (UMTS) is a third generation mobile communication system developed in Europe. The UMTS employs a Wideband Code Division Multiple Access (WCDMA) as radio access technique. The WCDMA is Direct Sequence-CDMA (DS-CDMA) technique of a Frequency Division Duplex (FDD) scheme, which transmits data using bandwidth of 5 MHz in frequency band of 2 GHz.

Generally, layers of radio interface protocol between a user equipment and a base station can be classified into L1 (a first layer), L2 (a second layer), and L3 (a third layer) based on the lower three layers of the Open System Interconnection (OSI) model that is well-known in communication systems.

Data is processed and transmitted and/or received in the unit of a data block between the layers. When data blocks are transferred between layers, a header can be added to the data block. Since the header does not contribute to improvement of data rate, it operates as transmission overhead.

Therefore, there is a need for a method of reducing the size of a header of a data block so as to enhance data transmission efficiency.

### SUMMARY OF THE INVENTION

In an aspect, a method of generating a data block in a wireless communication system is provided. The method includes receiving at least one data block of an upper layer, and generating a data block of a lower layer comprising a header and the at least one data block of the upper layer, the header comprising a Header Extension (HE) field, wherein the HE field indicates that the last data block of the upper layer ends at an end of the data block of the lower layer.

In another aspect, a method of generating a protocol data unit (PDU) in a radio link control (RLC) layer of a wireless communications system. The method includes generating a PDU comprising a header and a service data unit (SDU) received from an upper layer, the header comprising a header extension (HE) field, wherein the HE field indicates that the succeeding octet contains data and the last octet of the PDU is the last octet of the SDU.

In still another aspect, a method of generating a protocol data unit (PDU) in a radio link control (RLC) layer of a wireless communications system. The method includes generating a PDU comprising a header and at least one service data unit (SDU) received from an upper layer, the header comprising a header extension (HE) field, wherein the HE field indicates that the succeeding octet contains a length indicator (LI) and the last octet of the PDU is the last octet of the last SDU.

In still another aspect, a wireless communication device includes a RF (Radio Frequency) unit for transmitting radio signals, and a processor coupled to the RF unit, having a RLC (Radio Link Control) layer, and configured to generate a RLC PDU (Protocol Data Unit) comprising a header and a service data unit (SDU) received from an upper layer, the header comprising a header extension (HE) field, wherein the HE field indicates that the succeeding octet contains data and the last octet of the PDU is the last octet of the SDU.

### BRIEF DESCRIPTION OF THE DRAWINGS

FIG. 1 is a block diagram showing a wireless communication system.

FIG. 2 is a block diagram showing constitutional elements of a user equipment.

FIG. 3 is a view showing the structure of a radio protocol.

FIG. 4 is a view showing the format of an RLC PDU used in an AM RLC entity.

FIG. 5 is a view showing an example of configuring PDUs from SDUs.

FIG. 6 is a view showing AMD PDUs 21 to 23 among the AMD PDUs of FIG. 5.

FIG. 7 is a view showing the configuration in which three RLC SDUs are included in a single RLC SDU.

FIG. 8 is a view showing the configuration of a data block according to one embodiment of the present invention.

FIG. 9 is a view showing the configuration of a data block according to another embodiment of the present invention.

### DETAILED DESCRIPTION

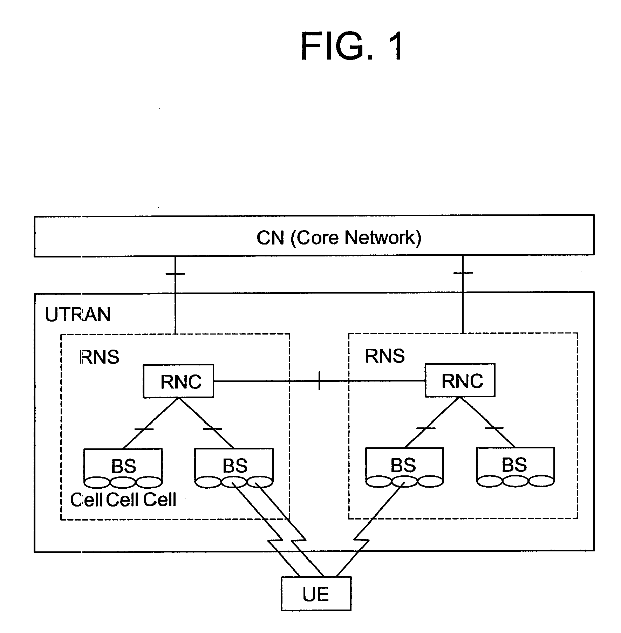

FIG. 1 is a block diagram showing a wireless communication system. This may be a network structure of UMTS (Universal Mobile telecommunications System). The wireless communication systems are widely deployed to provide a variety of communication services such as voices, packet data, and the like.

Referring to FIG. 1, UMTS includes a UTRAN (UMTS Terrestrial Radio Access Network) and a core network. A user equipment (UE) can be fixed or mobile and can be referred to as another terminology, such as an MS (Mobile Station), UT (User Terminal), SS (Subscriber Station), wireless device, or the like. The UTRAN includes one or more RNSs (Wireless network Subsystems), and a RNS is composed of a RNC (Wireless network Controller) and one or more base stations (BSs) managed by the RNC. There are one or more cells within the coverage of a BS. The BS generally is a fixed station that communicates with the user equipment and can be referred to as another terminology, such as a Node-B, a Base Transceiver System (BTS), access point, or the like. Hereinafter, downlink means communication from the base station to the user equipment, and uplink means communication from the user equipment and the base station.

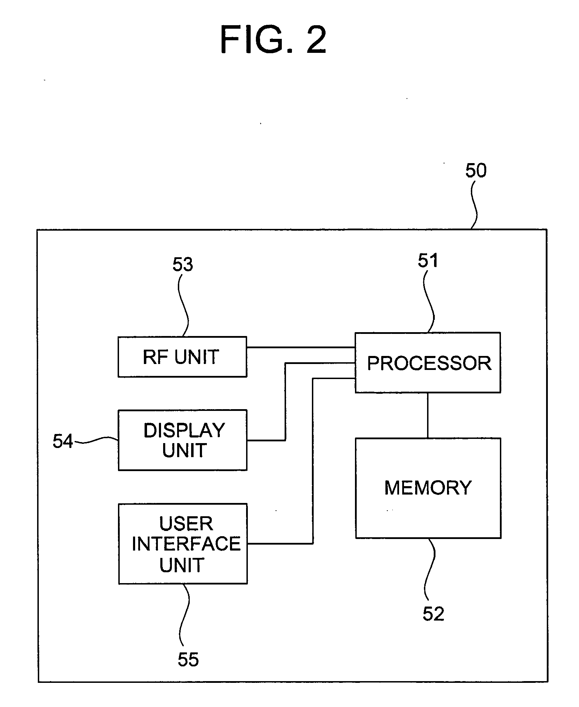

FIG. 2 is a block diagram showing constitutional elements of a user equipment. A user equipment 50 includes a processor 51, a memory 52, an RF unit 53, a display unit 54, and a user interface unit 55. The memory 52 is coupled to the processor 51 and stores operating systems, applications, and general files. The display unit 54 displays a variety of information on the user equipment and may use a well-known element, such as an LCD (Liquid Crystal Display), OLED (Organic Light Emitting Diode), or the like. The user interface unit 55 can be configured with a combination of well-known user interfaces such as a keypad, touch screen, and the like. The RF unit 53 is coupled to the processor 53 and transmits and/or receives radio signals.

Functions of layers of a radio interface protocol are implemented in the processor 51. The processor 51 provides a control plane and a user plane.

Layers of the radio interface protocol between **a** user equipment and **a** base station can be classifeid into L1 (a first layer), L2 (a second layer), and L3 (a third layer) based on the lower three layers of the Open System Interconnection (OSI) model that is well-known to communication systems.

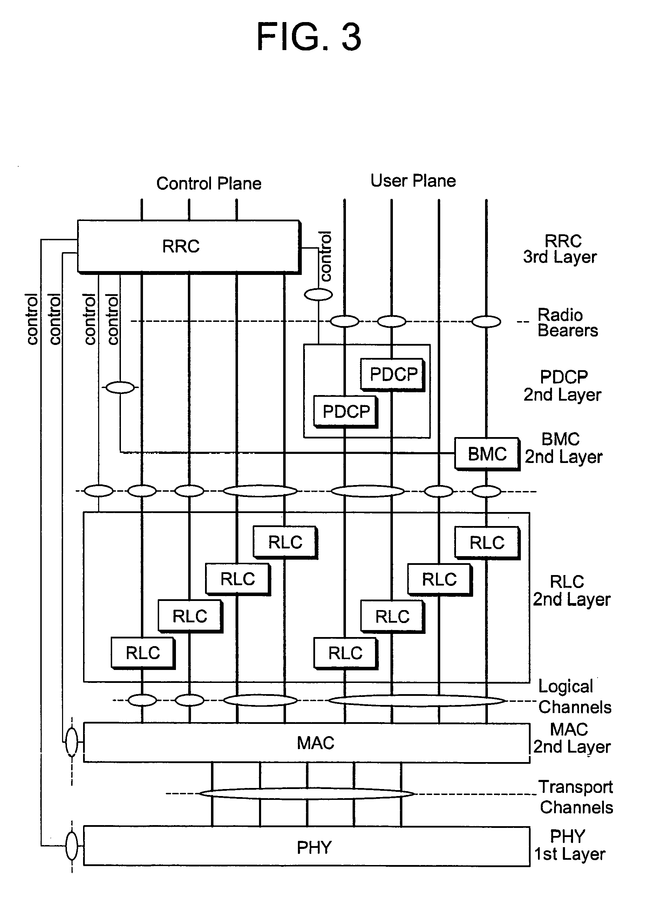

FIG. 3 is a view showing the structure of a radio protocol. Layers of the radio protocol exist in pairs between **a** user equipment and **a** UTRAN and take in charge of transmitting data of a radio section.

Referring to FIG. 3, a PHY (physical) layer belonging to a first layer, transmits data in a radio section using a variety of radio transmission techniques. The PHY layer is coupled to an MAC (Medium Access Control) layer, which is an upper layer of the PHY layer, through a transport channel. The transport channel can be classified into a dedicated transport channel and a common transport channel depending on whether or not the channel is shared.

The second layer comprises an MAC layer, an RLC (Radio Link Control) layer, a PDCP (Packet Data Convergence Protocol) layer, and a BMC (Broadcast/Multicast Control) layer.

An MAC layer maps a variety of logical channels to a transport channel, and performs logical channel multiplexing for mapping a plurality of logical channels to one transport channel. The MAC layer is coupled to the RLC layer, i.e. an upper layer of the MAC layer, through a logical channel. The logical channel is classified into a control channel for transmitting information on the control plane and a traffic channel for transmitting information on the user plane, depending on the type of transmitted information. The MAC layer is specifically divided into a MAC-b sublayer, MAC-d sublayer, MAC-c/sh sublayer, MAC-hs sublayer, and MAC-e sublayer, depending on the type of a managed transport channel. The MAC-b sublayer manages a BCH (Broadcast channel), i.e., a transport channel for broadcasting system information, the MAC-c/sh sublayer manages common transport channels shared with other user equipments, such as a FACH (Forward Access Channel), DSCH (Downlink Shared Channel), and the like, and the MAC-d sublayer manages a DCH (dedicated channel) that is a transport channel dedicated to a specific user equipment. In addition, in order to support high speed data transmission in the uplink and downlink, the MAC-hs sublayer manages a HS-DSCH (High Speed Downlink Shared Channel) that is a transport channel for high speed downlink transmission, and the MAC-e sublayer manages an E-DCH (Enhanced Dedicated Channel) that is a transport channel for high speed uplink transmission.

An RLC layer guarantees QoS (Quality of Service) of each radio bearer (RB) and serves to transmit data. The RLC layer has one or two independent RLC entities for each RB in order to guarantee QoS unique to the RB. The RLC layer provides three RLC modes, i.e., a transparent mode (TM), an unacknowledged mode (UM), and an acknowledged mode (AM), in order to support a variety of QoSs. In addition, the RLC layer adjusts a size of data appropriate to a lower layer to transmit the data into a radio section, and for this purpose, also performs segmentation and reassembly of data received from an upper layer.

A PDCP layer belongs to upper layer of the RLC layer and allows data that is transmitted using packets of an IP (Internet Protocol), such as IPv4 or IPv6, to be efficiently transmitted in a radio section of a relatively narrow bandwidth. For this purpose, the PDCP layer performs a header compression function, which allows only absolutely needed information, among the header part of data, to be transmitted to enhance transmission efficiency of a radio section. Since header compression is the basic function of the PDCH layer, the PDCH layer only exists in a PS (Packet Service) domain, and one PDCH entity exist for one RB in order to provide an effective header compression function for each PS service.

In the second layer, the BMC layer is placed above the RLC layer, schedules cell broadcast messages, and broadcasts the cell broadcast messages to user equipments.

An RRC (Radio Resource Control) layer located at the lowest portion of the third layer is defined only on the control plane. The RRC layer controls parameters of the first and second layers in relation with configuration, reconfiguration, and release of RBs, and controls logical channels, transport channels, and physical channels. At this point, an RB means a logical path provided by the first and second layers of the radio protocol to transfer data between a user equipment and the UTRAN. Establishing the RB means a procedure of specifying characteristics of the radio protocol layers and channels needed to provide a specific service and setting specific parameters and an operation method of each layer and channel.

The fundamental function of an RLC layer is to guarantee QoS of each RB and transmit data corresponding thereto. Since the RB service is a service provided by the second layer of the radio protocol to an upper layer, the entire second layer affects the QoS. However, among the services provided by the second layer, the RLC layer most particularly affects the QoS. Since the three modes provided by the RLC, i.e., TM, UM, and AM, support different QoSs, the methods and functions of the three modes are different from each other.

The TM RLC is a mode that does not attach any overhead to an RLC SDU (Service Data Unit) transferred from an upper layer in configuring an RLC PDU (Protocol Data Unit). The PDU is a data block unit transferred from a corresponding layer to another layer, and the SDU is a data block unit transferred from another layer to the corresponding layer. An RLC SDU a data block transferred from another layer to the RLC layer. The RLC SDU coming down from an upper layer to the RLC layer can be referred to as an upper data block, and an RLC PDU configured using RLC SDUs can be referred to as a lower data block. Since the RLC layer transparently passes through the SDUs, it is called as a TM RLC, and due to such a characteristic, the TM RLC performs following functions on the user and control planes. On the user plane, since data processing time within the RLC layer is short, the TM RLC mainly transmits real-time circuit data such as voices or streams of the CS (Circuit Service) domain. On the control plane, since an overhead is not attached in the RLC layer, the TM RLC transmits an RRC message in uplink or downlink.

A mode in which an overhead is added unlike the TM RLC is referred to as a non-transparent mode, and there are two types of the non-transparent mode, i.e., a mode where there is no acknowledgement (UM) and a mode where there is an acknowledgement (AM) for transmitted data. The UM RLC transmits a PDU attached with a PDU header including a sequence number (SN) to allow a receiver to know which PDU has been lost while being transmitted. Due to such a function, on the user plane, the UM RLC mainly transmits broadcast/multicast data or real-time packet data such as voices (e.g., Voice Over Internet Protocol (VoIP)) or streams of the PS domain. On the control plane, the UM RLC transmits an RRC message that does not need an acknowledgement among RRC messages transmitted to a specific user equipment or a specific user equipment group within a cell.

Although the AM RLC, which is one of the non-transparent modes, configures a PDU by attaching a PDU header including an SN in the same manner as the UM RLC does when configuring the PDU, there is a difference in that **a** receiver transmits an acknowledgement in response to a PDU transmitted by the transmitter, unlike the UM RLC. The reason that the receiver responses in the AM RLC mode is to request the transmitter to retransmit a PDU that the receiver does not receive. An object of the AM RLC is to guarantee error-free data transmission through retransmission. On the user plane, the AM RLC mainly transmits non-real-time packet data like TCP/IP of the PS domain. On the control plane, the AM RLC transmits an RRC message that absolutely needs an acknowledgement among RRC messages transmitted to a specific user equipment within a cell.

In the aspect of directionality, the TM and UM RLCs are used in a uni-directional communication, whereas the AM RLC is used in a bi-directional communication since there is feedback from a receiver. Since such a bi-directional communication is mainly used in a point-to-point communication, the AM RLC uses only a dedicated logical channel. There is also a difference in the aspect of a structure in that one RLC entity is structured as either a transmitter or a receiver in the TM and UM RLCs, whereas both a transmitter and a receiver exist in one RLC entity in the AM RLC.

Complexity of an AM RLC is caused by a retransmission function. In order to manage retransmission, the AM RLC has a retransmission buffer in addition to a transmission buffer and a receive buffer, uses transmitting and receiving windows for flow control, and performs a variety of functions, such as polling that a transmitter requests status information to a receiver of a peer RLC entity, a STATUS report that the receiver reports its buffer status to the transmitter of the peer RLC entity, a function of a status PDU for loading and transferring status information, a piggyback function for inserting the status PDU into a data PDU to enhance efficiency of data transmission, and the like. There are a reset PDU for requesting a counterpart AM RLC entity to reset all operations and parameters when a serious error is detected while an AM RLC entity is operating, and a reset acknowledgement PDU used as a response to such a reset PDU. In addition, the AM RLC also needs a variety of protocol parameters, together with status variables and a timer, to support such functions. PDUs used by the AM RLC to control data transmission, such as a status information report, status PDU, reset PDU, and the like, are called as a control PDU, and PDUs used to transfer user data are called as a data PDU.

RLC PDUs used by the AM RLC can be largely categorized into an RLC data PDU and an RLC control PDU. The RLC data PDU is used by TM, UM, and AM RLC entities to transfer upper layer PDUs (i.e., RLC SDUs). An AMD PDU is used by an AM RLC entity to transfer upper layer PDUs. There are four types of control PDUs, including a status PDU, piggybacked status PDU, reset PDU, and reset acknowledgement PDU.

One of the cases where a control PDU is used is reset procedure. The reset procedure is used to resolve an error situation in an operation of the AM RLC, e.g., a situation where sequence numbers used by a transmitter and a receiver are not matched or a PDU or SDU is failed to be transmitted for a predetermined number of times. If the reset procedure is used, the AM RLCs of the transmitter and receiver begin communication after initializing variables. The reset procedure operates as follows. First, a side that determines to start the reset procedure, i.e., the AM RLC of the transmitter, transmits a reset PDU to the receiver. The reset PDU includes a HFN (Hyper Frame Number) of the transmitting direction. Next, if the AM RLC of the receiver receives the reset PDU, it resets the HFN of the receiving direction and initializes environmental variables such as a sequence number and the like. Then, the AM RLC of the receiver transmits a reset acknowledgement PDU to the AM RLC of the transmitter. The reset acknowledgement PDU includes the HFN of the transmitting direction. After receiving the reset acknowledgement PDU, the AM RLC of the transmitter resets its HFN of receiving direction and initializes environmental variables.

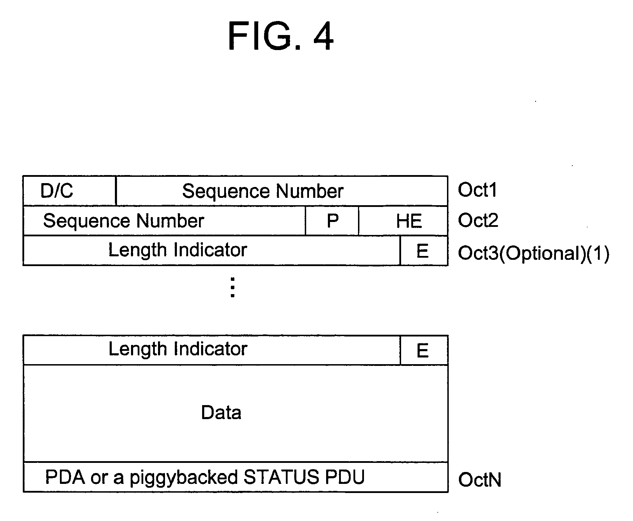

FIG. 4 is a view showing the format of an RLC PDU used in an AM RLC entity. The RLC PDU shows the structure of an AM RLC PDU which is a data PDU used when data is transmitted. An AM RLC entity uses the AM RLC PDU to transmit user data, or piggybacked status information and polling bits.

Referring to FIG. 4, an RLC PDU includes a header and a data field. The data field includes at least one RLC SDU or a segment of an RLC SDU. The header includes a sequence number (SN) field, an E (extension) field, **a** D/C (Data/Control) field, **a** P (Polling) field, and a HE (Header Extension) field. The header may further include an LI (Length Indicator) field and an E (Extension) field.

The SN field indicates the sequence number of the corresponding AMD PDU. The AM RLC PDU uses 12 bits for the SN field. The E field is a one-bit field that indicates whether a Data field follows or a set of E field and LI field follows. If the E field is set to '0', it means that the immediately next field is a Data field, and if the E field is set to '1' , it means that the immediately next field is the LI and E fields. The D/C field is a one-bit field that indicates the type of an AM PDU. It can be either data or control PDU. The P field is used to request a status report (one or several STATUS PDUs) from the receiver. If the P field is set to '0', it means that the status report is not needed, and if the P field is set to '1', it means that the status report is needed. The HE field is a two-bit that indicates whether a Data field follows or a set of LI field and E field follows. If the HE field is set to '00', it indicates that the succeeding octet is data, and if the HE field is set to '01', it means that the succeeding octet is the LI field.

The LI field indicates a boundary of each SDU in case where the RLC PDU includes several SDUs. The LI indicates the last octet of each RLC SDU ending within the PDU. The length of the LI field is 7 or 15 bits. When the AMD (AM Data) PDU is equal to or smaller than 126 octets, the AMD PDU uses a 7-bit LI field. On the other hand, if the AMD PDU is not equal to or smaller than 126 octets, the it uses a 15-bit LI field.

An LI that is set to a special value to indicate the end or start point of an SDU included in the Data field can be added. Table 1 shows examples of an LI that is set to a special value of 7 bits.

**[Table 1]**

| bits | Description |
|---|---|
| 0000000 | The previous RLC PDU was exactly filled with the last segment of an RLC SDU and there is no "Length Indicator" that indicates the end of the RLC SDU in the previous RLC PDU. |
| 1111100 | UMD PDU: The first data octet in this RLC PDU is the first octet of an RLC SDU. AMD PDU: Reserved (PDUs with this coding will be discarded by this version of the protocol). |
| 1111101 | UMD PDU: The first data octet in this RLC PDU is the first octet of an RLC SDU and the last octet in this RLC PDU is the last octet of the same RLC SDU. AMD PDU: Reserved (PDUs with this coding will be discarded by this version of the protocol) . |
| 1111110 | AMD PDU: The rest of the RLC PDU includes a piggybacked STATUS PDU. UMD PDU: The RLC PDU contains a segment of an SDU but neither the first octet nor the last octet of this SDU. |
| 1111111 | The rest of the RLC PDU is padding. The padding length can be zero. |

Table 2 shows examples of an LI that is set to a special value of 15 bits.

**[Table 2]**

| Bits | description |
|---|---|
| 000000000000000 | The previous RLC PDU was exactly filled with the last segment of an RLC SDU and there is no "Length Indicator" that indicates the end of the RLC SDU in the previous RLC PDU. |
| 111111111111010 | UMD PDU: The first data octet in this RLC PDU is the first octet of an RLC SDU and the second last octet in this RLC PDU is the last octet of the same RLC SDU. The remaining one octet in the RLC PDU is ignored. |
| 111111111111011 | The last segment of an RLC SDU was one octet short of exactly filling the previous RLC PDU and there is no "Length Indicator" that indicates the end of the RLC SDU in the previous RLC PDU. The remaining one octet in the previous RLC PDU is ignored. |
| 111111111111100 | UMD PDU: The first data octet in this RLC PDU is the first octet of an RLC SDU. AMD PDU: Reserved (PDUs with this coding will be discarded by this version of the protocol). |
| 111111111111101 | UMD PDU: The first data octet in this RLC PDU is the first octet of an RLC SDU and the last octet in this RLC PDU is the last octet of the same RLC SDU. AMD PDU: Reserved (PDUs with this coding will be discarded by this version of the protocol). |
| 111111111111110 | AMD PDU: The rest of the RLC PDU includes a piggybacked STATUS PDU. UMD PDU: The RLC PDU contains a segment of an SDU but neither the first octet nor the last octet of this SDU. |
| 111111111111111 | The rest of the RLC PDU is padding. The padding length can be zero. |

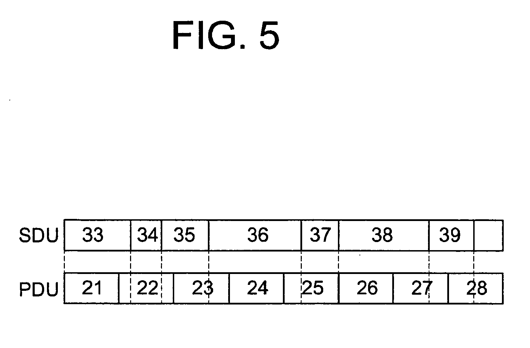

FIG. 5 is a view showing an example of configuring PDUs from SDUs. If a transmitter's AM RLC receives SDUs from an upper layer, it generates AMD (AM Data) PDUs of a predetermined size by segmenting or reassembling the SDUs. An AMD PDU is configured such that a header is attached to a payload. The payload consists of a segment of the SDU or one or more SDUs. The header consists of LI fields indicating the position of a boundary of the SDU when a set of sequence numbers (SNs) of the PDU and the boundary of the SDU exist.

Referring to FIG. 5, it is assumed that previous 32 SDUs are loaded on previous 20 PDUs and successfully transmitted already. SDUs after SDU 33 are transferred to the AM RLC as shown in the figure, and the AM RLC segments or reassembles the SDUs and generates AMD PDUs of a predetermined size. Although SDUs up to SDU 39 are shown in the figure, SDUs are subsequently transferred to the AM RLC in practice, and the AM RLC continuously configures PDUs for the transferred SDUs. The header of an AMD PDU includes the SN of the PDU, and if there is a boundary surface of SDUs in the configured PDU, an LI that indicates the position of the boundary surface is also added.

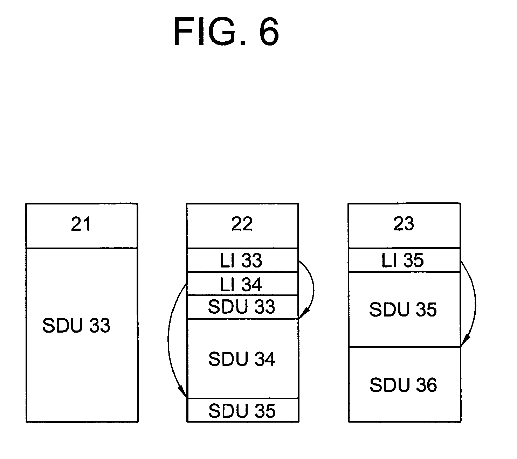

FIG. 6 is a view showing AMD PDUs 21 to 23 among the AMD PDUs of FIG. 5.

Referring to FIG. 6, since PDU 21 is configured only with the first segment of SDU 33, there is no boundary of SDUs. Accordingly, PDU 21 does not need an LI and is configured with the SN and a portion of SDU 33.

Since PDU 22 is configured with the final segment of SDU 33, the entire SDU 34, and the first segment of SDU 35, PDU 22 contains two boundaries. Accordingly, PDU 22 includes two LI fields indicating each of the boundaries in the header.

Since PDU 23 is configured with a segment of SDU 35 and a segment of SDU 36, there is one boundary between SDU 35 and SDU 36. Accordingly, PDU 23 includes one LI field indicating the boundary between SDU 35 and SDU 36 in the header.

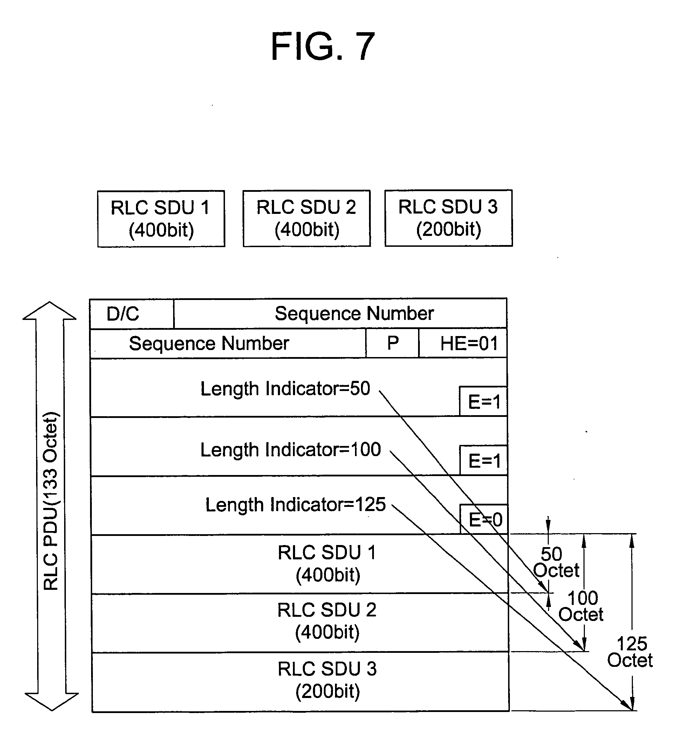

FIG. 7 is a view showing the configuration in which three RLC SDUs are included in a single RLC SDU.

In FIG. 7, there is shown a case where three RLC SDUs having the lengths of 50 octets (400 bits), 50 octets (400 bits) and 25 octets (200 bits), respectively, are included in an RLC PDU having a length of 133 octets.

Referring to FIG. 7, an LI indicates a boundary of the SDUs existing within an AM RLC PDU. Thus, if the final segment of each SDU exists within the AM RLC PDU, information on each final segment must be included in a header portion of the AM RLC PDU. As shown in FIG. 7, since the RLD PDU includes the final segments of three RLC SDU (RLC SDU1, RLC SDU2, RLC SDU3), it includes three LIs.

As can be seen from the foregoing example, each time one LI is added, an overhead of 15 bits or 7 bits occurs. The RLC header is not information which is actually available to users. Thus, the RLC header is efficient as its length decreases in terms of data transmission efficiency.

In order to reduce the size of the RLC header, an RLC entity does not include a specific field depending on whether a specific situation occurs. The RLC entity does not include a specific field, but a specific value should be additionally set in another field of the RLC header depending on whether a specific situation occurs.

In one embodiment, the specific situation may be a case where the end of the RLC PDU matches with end of the RLC SDU.

In another embodiment, the specific situation may be a case where the end of the RLC PDU matches with end of the RLC SDU and two or more RLC SDUs is included in the RLC PDU.

A specific field which is not included in the RLC header may an LI field. Another field in which an RLC entity is set as a specific value may be an HE field.

In other words, a specific field of the RLC PDU is set to a specific value means that a specific situation has occurred. In this case, the specific field may be the HE field. The specific value may be '10'. The specific value may be '11'. The specific value may be '01'. And, the specific value may be '00'.

In still another embodiment, the specific situation may be a case where the end of an RLC PDU matches with end of the RLC SDU included finally in the RLC PDU. One or more RLC SDUs is included within the RLC PDU.

When an RLC entity constructs a RLC PDU, the RLC entity can determine whether other specific field is included in the header of the RLC PDU depending on a set value of the specific field of the header of the RLC PDU.

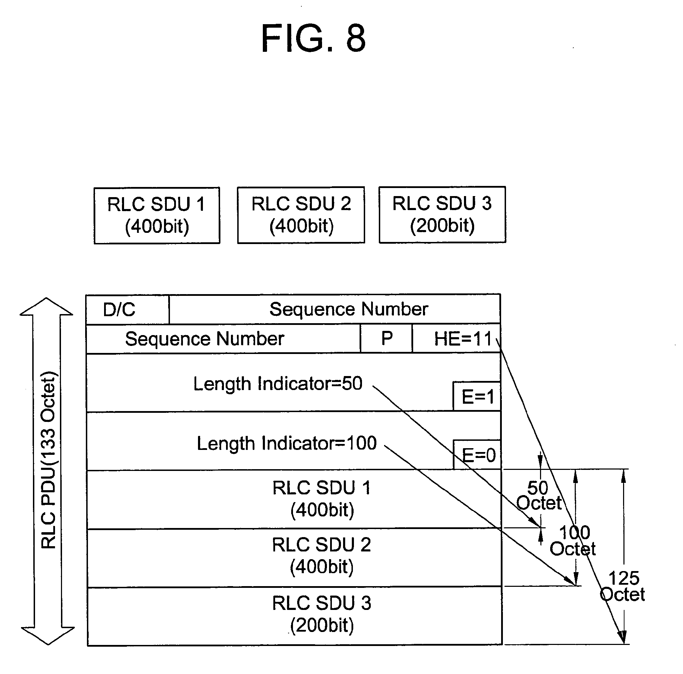

FIG. 8 is a view showing the configuration of a data block according to the present invention.

Referring to FIG. 8, a value '11' or '10' which is not defined in a current HE field is used to inform a specific situation. The current HE field can be set to only '00' or '01'. For example, when a specific situation occurs, the HE field can be determined to be set to '11'. In this case, the specific situation is a case where data of a plurality of RLC SDUs included in an RLC PDU, and the end of an RLC SDU finally included in the RLC PDU coincides with that of the RLC SDU.

If the HE field is set to '11', it means that the end of an RLC SDU finally included in the RLC PDU coincides with that of the RLC SDU. Also, since the HE field is set to '11', the LI indicating the end of the finally included RLC SDU is not included in the header of the RLC PDU. Since the HE field is set to '11', data of one or more RLC SDUs is included in the RLC PDU. Since the HE field is set to '11', at least one LI is included in the RLC PDU. The HE field indicates that the succeeding octet contains at least one length indicator and the last octet of the lower data block is the last octet of an upper data block.

In this case, the value '11' is merely illustrative, and any value can be set in order for a receiver and a transmitter to determine the specific situation through the HE field. For example, the value can be replaced with a value such as '10', '00' or '01'.

Conventionally, the LI field had to be included in the RLC header for each RLC SDU included in the RLC PDU. However, if the HE field can provide information on the end of the RLC SDU with respect to the last RLC SDU included in the RLC PDU, the information on the end of the RLC SDU does not need to be included in the LI field. Thus, the size of the RLC header can be reduced as many as the length of one LI field.

When an AM RLC entity of the transmitter configures an AM RLC PDU, if the end of the last RLC SDU among RLC SDUs included in the AM RLC PDU coincides with that of the AM RLC PDU and data of a plurality of RLC PDUs is included in an AM RLC PDU, an LI for the last RLC SDU is not included in the header of the AM RLC PDU and the HE field is set to a specific value such as '11'.

When an AM RLC entity of the transmitter configures an AM RLC PDU, if the end of the last RLC SDU among RLC SDUs included in the AM RLC PDU coincides with that of the AM RLC PDU, an LI for the last RLC SDU is not included in the header of the AM RLC PDU and the HE field is set to a specific value such as '11'.

When an AM RLC entity of the receiver restores RLC SDUs from a received AM RLC PDU, it checks an HE field included in a header of the received AM RLC PDU. If the HE field is set to a specific value such as '11', the AM RLC entity of the receiver determines that the final segment of the AM RLC PDU coincides with the end of an RLC SDU finally included in the AM RLC PDU and restores the RLC SDUs from the AM RLC PDU.

When an AM RLC entity of the receiver restores RLC SDUs from a received AM RLC PDU, it checks an HE field included in a header of the received AM RLC PDU. If the HE field is set to a specific value such as '11', the AM RLC entity of the receiver determines that an LI for an RLC SDU finally included in the AM RLC PDU is not included in the header of the AM RLC PDU and restores the RLC SDUs from the AM RLC PDU.

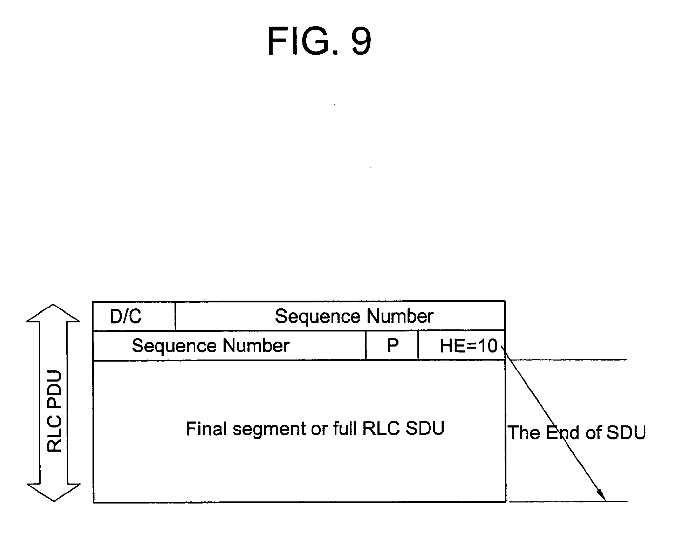

FIG. 9 is a view showing the configuration of a data block according to another embodiment of the present invention.

Referring to FIG. 9, a value '11' or '10' which is not defined in a current HE field is used to inform a specific situation. The current HE field can be set to only '00' or '01'. For example, when a specific situation occurs, the HE field can be determined to be set to '10'. In this case, the specific situation is a case where the end of an RLC SDU included in the RLC PDU coincides with that of the RLC SDU.

If the HE field is set to '10', it means that the end of an RLC SDU included in the RLC PDU coincides with that of the RLC SDU. Also, it can be seen that since the HE field is set to '10', the LI indicating the end of the included RLC SDU is not included in the header of the RLC PDU. Further, it can be seen that since the HE field is set to '11', data of one or more RLC SDUs is included in the RLC PDU. That is, it can be seen that since the HE field is set to '10', an LI is included in the RLC PDU. The HE field indicates that the succeeding octet contains an upper data block and the last octet of the lower data block is the last octet of an upper data block.

In this case, the value '10' is merely illustrative, and any value can be set in order for a receiver and a transmitter to grasp the specific situation through the HE field. For example, the value can be replaced with a value such as '11', '00' or '01'.

Conventionally, the LI field had to be included in the RLC header for each RLC SDU included in the RLC PDU. However, if the HE field can provide information on the end of the RLC SDU with respect to the RLC SDU included in the RLC PDU, the information on the end of the RLC SDU does not need to be included in the LI field. Thus, the size of the RLC header can be reduced as many as the length of one LI field.

When an AM RLC entity of the transmitter configures an AM RLC PDU, if the end of the RLC SDU included in the AM RLC PDU coincides with that of the AM RLC PDU, an LI for the included RLC SDU is not included in the header of the AM RLC PDU and the HE field is set to a specific value such as '10'.

When an AM RLC entity of the receiver restores RLC SDUs from a received AM RLC PDU, it checks an HE field included in a header of the received AM RLC PDU. If the HE field is set to a specific value such as '10', the AM RLC entity of the receiver determines that the final segment of the AM RLC PDU coincides with the end of an RLC SDU included in the AM RLC PDU and restores the RLC SDUs from the AM RLC PDU.

When an AM RLC entity of the receiver restores RLC SDUs from a received AM RLC PDU, it checks an HE field included in a header of the received AM RLC PDU. If the HE field is set to a specific value such as '10', the AM RLC entity of the receiver determines that an LI for an RLC SDU included in the AM RLC PDU is not included in the header of the AM RLC PDU and restores the RLC SDUs from the AM RLC PDU.

By reducing size of the header of the AM RLC PDU, transmission rate can be improved.

The steps of a method described in connection with the embodiments disclosed herein may be implemented by hardware, software or a combination thereof. The hardware may be implemented by an application specific integrated circuit (ASIC) that is designed to perform the above function, a digital signal processing (DSP), a programmable logic device (PLD), a field programmable gate array (FPGA), a processor, a controller, a microprocessor, the other electronic unit, or a combination thereof. A module for performing the above function may implement the software. The software may be stored in a memory unit and executed by a processor. The memory unit or the processor may employ a variety of means that is well known to those skilled in the art.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are intended to be embraced by the appended claims.

## Claims

1. A method of generating a data block in a wireless communication system, the method comprising:
receiving at least one data block of an upper layer; and
generating a data block of a lower layer comprising a header and the at least one data block of the upper layer, the header comprising a Header Extension (HE) field, wherein the HE field indicates that the last data block of the upper layer ends at an end of the data block of the lower layer.

2. The method of claim 1, wherein the HE field further indicates if the next octet is data or a length indicator (LI) and extension bit (E).

3. The method of claim 1, wherein the data block of the lower layer is a Radio Link Control (RLC) PDU (Protocol Data Unit).

4. The method of claim 3, wherein the RLC PDU is used by an Acknowledged Mode (AM) RLC entity.

5. The method of claim 1, wherein the at least one data block of the upper layer is at least one of a RLC Service Data Unit (SDU) and a segment of the RLC SDU.

6. The method of claim 1, wherein the HE field comprises 2 bits and a value of the 2 bits is '10'.

7. The method of claim 1, wherein the header further comprising a length indicator (LI) field which indicates the last octet of each data block of the upper layer ending except the last data block of the upper layer.

8. The method of claim 1, wherein the HE field further indicates that the succeeding octet contains a length indicator (LI) and the last octet of the data block of the lower layer is the last octet of the last data block of the upper layer.

9. The method of claim 8, wherein the HE field comprises 2 bits and a value of the 2 bits is '11'.

10. The method of claim 1, wherein the header further comprises a Polling (P) field which indicates a request for a status report.

11. A method of generating a protocol data unit (PDU) in a radio link control (RLC) layer of a wireless communications system, the method comprising:
generating a PDU comprising a header and a service data unit (SDU) received from an upper layer, the header comprising a header extension (HE) field, wherein the HE field indicates that the succeeding octet contains data and the last octet of the PDU is the last octet of the SDU.

12. The method of claim 11, wherein the PDU is an acknowledged mode data (AMD) PDU.

13. The method of claim 11, wherein the HE field comprises 2 bits and a value of the 2 bits is '10'.

14. The method of claim 11, wherein the SDU is a final segment SDU or a full SDU.

15. A method of generating a protocol data unit (PDU) in a radio link control (RLC) layer of a wireless communications system, the method comprising:
generating a PDU comprising a header and at least one service data unit (SDU) received from an upper layer, the header comprising a header extension (HE) field, wherein the HE field indicates that the succeeding octet contains a length indicator (LI) and the last octet of the PDU is the last octet of the last SDU.

16. The method of claim 15, wherein the header further comprising a length indicator field which indicates the last octet of each SDU ending except the last SDU.

17. A wireless communication device comprising:
a RF (Radio Frequency) unit for transmitting radio signals; and
a processor coupled to the RF unit, having a RLC (Radio Link Control) layer, and configured to generate a RLC PDU (Protocol Data Unit) comprising a header and a service data unit (SDU) received from an upper layer, the header comprising a header extension (HE) field, wherein the HE field indicates that the succeeding octet contains data and the last octet of the PDU is the last octet of the SDU.

18. The wireless communication device of claim 17, wherein the SDU is a final segment SDU or a full SDU.
